(19) Europäisches Patentamt
European Patent Office
Office européen des brevets

(11) **EP 1 497 234 B1**

(12) **FASCICULE DE BREVET EUROPEEN**

(45) Date de publication et mention de la délivrance du brevet:
**03.11.2010 Bulletin 2010/44**

(21) Numéro de dépôt: **03740626.1**

(22) Date de dépôt: **16.04.2003**

(51) Int Cl.:
*C03C 17/00* (2006.01)    *C03C 17/25* (2006.01)
*C03C 17/34* (2006.01)    *C04B 41/52* (2006.01)
*C04B 41/50* (2006.01)    *C03C 25/52* (2006.01)
*C03C 25/42* (2006.01)

(86) Numéro de dépôt international:
**PCT/FR2003/001218**

(87) Numéro de publication internationale:
**WO 2003/087002 (23.10.2003 Gazette 2003/43)**

(54) **SUBSTRAT A REVETEMENT AUTO-NETTOYANT**

SUBSTRAT MIT SELBSTREINIGENDER BESCHICHTUNG

SUBSTRATE WITH A SELF-CLEANING COATING

(84) Etats contractants désignés:
**AT BE BG CH CY CZ DE DK EE ES FI FR GB GR HU IE IT LI LU MC NL PT RO SE SI SK TR**

(30) Priorité: **17.04.2002 FR 0204775**

(43) Date de publication de la demande:
**19.01.2005 Bulletin 2005/03**

(73) Titulaire: **SAINT-GOBAIN GLASS FRANCE**
**92400 Courbevoie (FR)**

(72) Inventeurs:
• **GUENEAU, Lethicia**
  **F.94300 Vincennes (FR)**
• **RONDET, Mauricette**
  **F-94400 Vitry sur Seine (FR)**
• **Durand ,Clarisse**
  **75014 Paris (FR)**

(74) Mandataire: **Teyssedre, Laurent et al**
**Saint-Gobain Recherche**
**39, quai Lucien Lefranc**
**B.P. 135**
**93303 Aubervilliers Cedex (FR)**

(56) Documents cités:
**EP-A- 1 132 133    WO-A-00/37374**

• **DATABASE WPI Section Ch, Week 200206 Derwent Publications Ltd., London, GB; Class A25, AN 2002-044328 XP002229892 & JP 2001 233615 A (HONMA T), 28 août 2001 (2001-08-28)**
• **DATABASE WPI Section Ch, Week 200257 Derwent Publications Ltd., London, GB; Class A97, AN 2002-529767 XP002229893 & CN 1 342 517 A (UNIV QINGHUA), 3 avril 2002 (2002-04-03)**
• **DATABASE WPI Section Ch, Week 200208 Derwent Publications Ltd., London, GB; Class D22, AN 2002-057931 XP002229894 & JP 2001 246261 A (MITSUBISHI JUKOGYO KK) , 11 septembre 2001 (2001-09-11)**
• **DATABASE WPI Section Ch, Week 200023 Derwent Publications Ltd., London, GB; Class J04, AN 2000-056188 XP002229895 & JP 2000 070710 A (AGENCY OF IND SCI & TECHNOLOGY), 7 mars 2000 (2000-03-07)**

**Description**

L'invention concerne différents types de matériau que l'on peut trouver dans des bâtiments, des véhicules, du mobilier urbain ou encore dans l'électroménager, à savoir, notamment :

- des substrats transparents en verre ou en polymère destinés à servir de vitrage, d'écran de visualisation par exemple,
- des substrats en céramique ou vitrocéramique que l'on peut utiliser par exemple dans l'électroménager,
- des matériaux architecturaux comme des tuiles, des carrelages, de la pierre, des compositions cimentaires, des surfaces métalliques
- des matériaux minéraux fibreux, comme de la laine de verre d'isolation ou des fils de verre textile, qu'on peut utiliser comme matériau de filtration, pour faire des faux plafonds, des fibres de quartz, de silice...

Des études récentes ont été faites pour essayer d'améliorer le confort d'utilisation de ces matériaux, notamment pour faciliter leur entretien.

En particulier, on a mis au point des revêtements fonctionnels présentant des propriétés photocatalytiques. Il s'agit notamment de revêtements comprenant du $TiO_2$ au moins partiellement cristallisé, notamment sous forme anatase et qui sont notamment décrits dans les brevets WO 97/10185, WO 97/10186, WO 99/44954 et WO 01/66271. Ce type de matériau semiconducteur à base d'oxyde métallique, éventuellement dopé (il y a aussi d'autres oxydes susceptibles d'être photocatalytiques, comme le ZnO...) est apte sous l'effet de rayonnements de longueur d'onde adéquate à initier des réactions radicalaires provoquant l'oxydation de composés organiques : ce type de revêtement, s'il est suffisamment exposé au rayonnement ad hoc (généralement des ultra-violets, éventuellement le domaine visible), est donc très efficace pour dégrader des salissures organiques. En outre, il a été découvert que, notamment quand il s'agit de revêtements à base d'oxyde de titane, ceux-ci présentaient aussi un certain caractère hydrophile s'ils étaient exposés suffisamment longtemps audit rayonnement. Ce revêtement est donc très performant, en ce sens qu'il est capable de dégrader des salissures organiques, et d'évacuer par son hydrophile les salissures minérales. Cependant, son activité est liée à son exposition (pendant une durée suffisante) à un rayonnement (suffisamment intense) de longueur d'onde ad hoc. Ce type de revêtement a donc un comportement qui dépend fortement des conditions climatiques environnantes en cas d'exposition en extérieur, notamment les conditions d'ensoleillement, de pluviométrie. De même, il tend à avoir une activité nocturne moindre que son activité diurne, en l'absence d'éclairage approprié.

Le document JP 2001-246 261 décrit des substrats à action photocatalytique comportant une structure mésoporeuse en silicates et de fines particules de $TiO_2$ insérées dans les pores.

Le document WO 03/010106, art antérieur selon l'Art 54(3) CBE, décrit un procédé d'obtention d'un substrat muni sur sa surface d'un revêtement à structure mésoporeuse présentant des propriétés photocatalytiques et comportant de l'oxyde de titane, le procédé comprenant une étape de mise en contact du substrat avec une composition d'agent structurant organique et d'au moins un précurseur constituant le revêtement mésoporeux, une étape de croissance des molécules du précurseur et une étape d'élimination de l'agent structurant organique.

L'invention a alors pour but d'améliorer encore la fonctionnalité conférée par ce type de revêtements « auto-nettoyants » ou « retardateurs d'encrassement ». Elle vise notamment l'obtention de revêtements qui puissent avoir une efficacité accrue, qui puissent être plus « polyvalents » à différents titres : d'abord vis-à-vis des conditions d'exposition aux rayonnements, ensuite vis-à-vis des contraintes mécaniques (résistance à l'abrasion...), enfin vis-à-vis de l'association d'autres fonctionnalités. Elle vise plus particulièrement l'obtention de revêtements qui puissent, même dans des conditions d'ensoleillement médiocres, même la nuit, ou en intérieur notamment sous l'action du rayonnement ultra-violet résiduel de lampes d'éclairage classiques ou du rayonnement ultra-violet passant au travers d'un vitrage, présenter une certaine activité anti-salissure. Elle vise également des produits auxquels une lampe UV est associée, notamment des filtres autonettoyants.

L'invention a tout d'abord pour objet un substrat qui peut être essentiellement transparent, notamment à base de verre ou de polymère(s), ou qui peut être en céramique ou en vitro-céramique, ou qui peut encore être en matériau architectural (du type enduit de façade, dalle ou pavé de béton, béton architectonique, tuile, matériau à composition cimentaire, terre cuite, ardoise, pierre, ou qui peut encore être un substrat fibreux, à base verrière du type laine minérale d'isolation ou fils de verre de renforcement, ou un produit comprenant des fibres de quartz ou de silice). Ce substrat est caractérisé par le fait qu'il est muni sur au moins une partie de sa surface d'un revêtement dont la structure mésoporeuse présente des propriétés photocatalytiques et comporte de l'oxyde de titane au moins partiellement cristallisé, notamment sous forme anatase et/ou rutile. Le terme « mésoporeux » fait référence à des pores de diamètres compris entre 2 et 50 nm. La structure mésoporeuse, obtenue de la manière qui sera décrite ci-dessous, est notamment à base d'au moins un composé de l'un au moins des éléments Si, W, Sb, Ti, Zr, Ta, V, B, Pb, Mg, Al, Mn, Co, Ni, Sn, Zn, In, Fe et Mo, le cas échéant en liaison covalente avec des éléments tels que O, S, N, C ou similaire. L'oxyde de titane au moins partiellement cristallisé est par exemple incorporé dans la structure mésoporeuse sous forme de particules parfaitement discernables. L'ensemble de la structure mésoporeuse incorporant l'oxyde de titane est essentiellement solide, susceptible d'une cohésion, d'une tenue mécanique et d'une résistance à l'abrasion excellentes. La structure mésoporeuse est susceptible d'être exclusivement composée de titane ou d'un composé du titane tel qu'oxyde, notamment cristallisé sous forme anatase, rutile...Il s'est avéré que l'oxyde de titane ainsi incorporé exerce son activité photocatalytique à un degré exceptionnellement élevé. Ainsi un rayonnement ultra-violet résiduel après traversée d'un vitrage simple, double..., ou un rayonnement ultra-violet résiduel provenant d'un éclairage électrique d'intérieur suffit au substrat de l'invention pour qu'il dégrade un résidu organique, et pour que celui-ci soit ensuite entraîné dans un film liquide relativement uniforme qui se forme le cas échéant sur le substrat rendu hydrophile par le rayonnement. Le revêtement de l'invention allie la fonctionnalité de dégradation des résidus organiques -par photocatalyse- et d'évacuation des résidus organiques et minéraux -caractère hydrophile/oléophile- sous l'effet de tout liquide, tel que de condensation. Les performances élevées procurées par l'invention sont peut être attribuables au moins en partie à l'interconnection du réseau de pores, permettant une bonne accessibilité des pollutions vers les particules d'oxyde de titane, de même qu'une bonne diffusion dans le revêtement des espèces photogénérées en surface de ces particules.

D'autre part, la résistance à l'abrasion et la durabilité de l'activité photocatalytique à un tel degré élevé sont excellentes (voir exemples ci-dessous). L'invention permet donc également de conserver la porosité après abrasion, alors que l'on pouvait plutôt attendre qu'une abrasion ait pour conséquence une densification de la couche superficielle et donc finalement, une perte des propriétés anti-salissures.

De plus, la nature mésoporeuse du substrat permet d'en envisager une imprégnation postérieure à la formation de la structure mésoporeuse avec des agents fonctionnels désodorisants, antibactériens ou de toutes autres natures.

Avantageusement, le substrat selon l'invention est essentiellement transparent, plan ou courbé, du type vitrage, car c'est dans ce type d'application que l'accumulation de salissures empêchant la visibilité est la plus gênante, et que les lavages sont les plus nécessaires pour garantir leur transparence. Il peut s'agir de vitrage présentant un relief macroscopique, par exemple des motifs en pyramides en profondeurs de l'ordre de quelques millimètres -verre imprimé-, ou d'un vitrage présentant des irrégularités de surface beaucoup plus petites telles que résultant d'une attaque chimique à l'acide fluorhydrique -verre sablé, matifié-.

De préférence, le revêtement de l'invention est formé avec interposition d'une sous-couche à base de dérivé au moins partiellement oxydé du silicium choisi parmi le dioxyde de silicium, des oxydes de silicium sous-stoechiométriques, l'oxycarbure, l'oxynitrure ou l'oxycarbonitrure de silicium. La sous-couche s'avère utile quand la surface sous-jacente est en verre, car la migration d'ions alcalins (sodium) du verre dans le revêtement de l'invention peut, dans certaines conditions, en altérer les propriétés photocatalytiques ; or la sous-couche fait barrière aux alcalins. La sous-couche peut être du type de celle décrite dans le brevet WO 01 /32578 précité. Elle a avantageusement un indice réfraction compris entre 1,45 et 1,80, notamment entre 1,50 et 1,75, par exemple entre 1,55 et 1,68. Un tel indice relativement peu élevé permet, sur un substrat transparent du type verre, d'éviter un effet réfléchissant qui peut être jugé inesthétique.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette dernière technique permet d'obtenir des revêtements en $SiO_xC_y$ ou en $SiO_2$ assez aisément, notamment par dépôt directement sur le ruban de verre float dans le cas de substrats verriers. Mais on peut aussi effectuer le dépôt par une technique sous vide, par exemple par pulvérisation cathodique à partir d'une cible de Si (éventuellement dopée) ou d'une cible en sous-oxyde de silicium (en atmosphère réactive oxydante et/ou nitrurante par exemple).

Cette sous-couche a de préférence une épaisseur d'au moins 5 nm, notamment une épaisseur comprise entre 10 et 200 nm, par exemple entre 80 et 120 nm.

Selon d'autres caractéristiques avantageuses du substrat de l'invention :

- le revêtement à structure mésoporeuse est déposé par voie sol-gel ;
- son épaisseur est comprise entre 30 et 800 nm ;
- l'oxyde de titane incorporé dans la structure mésoporeuse est éventuellement dopé comme expliqué dans les demandes WO 97/10185 et WO 97/10186, et comprend des nanoparticules de diamètres compris entre 0,5 et 100 nm, notamment entre 1 et 80 nm, elles-mêmes constituées d'amas de grains ou cristallites élémentaires de diamètres compris entre 0,5 et 10 nm. Le terme « diamètre » est à prendre ici au sens large, il s'agit plus d'une évaluation de la taille de la nanoparticule ou de la cristallite. La forme de celle-ci peut se rapprocher d'une sphère, ou bien d'une forme allongée en grain de riz ou d'une forme complètement aléatoire.

Un autre objet de l'invention réside dans un procédé de fabrication d'un substrat tel que décrit ci-dessus, comprenant successivement :

- la préparation d'une composition liquide comprenant au moins un précurseur du matériau constituant la structure mésoporeuse du revêtement et au moins un agent structurant organique,

- la précipitation du précurseur autour de l'agent structurant organique et la croissance de molécules dérivées du précurseur,
- l'ajout dans la composition liquide de nanoparticules ou de cristallites -selon définition ci-dessus- d'oxyde de titane éventuellement dopé, de diamètres compris entre 0,5 et 100 nm,
- l'application de la composition sur la surface à revêtir,
- l'élimination de l'agent structurant organique,

les grains ou cristallites élémentaires d'oxyde de titane étant incorporés dans la structure mésoporeuse tout en y préservant essentiellement leur intégrité, plusieurs d'entre eux pouvant y être agrégés en amas. Au cours d'une telle fabrication du substrat, il n'est pas exclu que des grains ou cristallites d'oxyde de titane s'agrègent les uns avec les autres et/ou croissent, notamment les plus petits d'entre eux, selon les conditions opératoires (teneur, pH, température...).

Pour la fabrication du substrat de l'invention, la préparation de la composition liquide comprend avantageusement :

- la préparation d'un sol de précurseur d'oxyde (notamment de silice),
- le mûrissement du sol, puis
- le mélange avec l'agent structurant.

En effet, le mûrissement du sol permet une condensation préliminaire du précurseur d'oxyde qui favorise la structuration du revêtement d'oxyde condensé sur la surface support en domaines de grande dimension. Des conditions avantageuses de mûrissement comprennent le maintien du sol à une température de 40 à 60°C pendant une durée de 30 min à 24 heures, le temps de mûrissement étant d'autant plus court que la température est élevée.

Dans ce cas, le précurseur d'oxyde est avantageusement un composé hydrolysable, tel qu'un halogénure ou un alcoxyde, l'agent structurant est avantageusement choisi parmi les tensioactifs cationiques, de préférence du type ammonium quaternaire tel que bromure de cétyltriméthylammonium, ou non ioniques, dont les copolymères di-bloc ou tri-bloc à base par exemple d'oxyde d'éthylène ou de propylène.

L'invention a aussi pour objet l'application des substrats selon l'invention, notamment ceux qui sont essentiellement transparents, à la fabrication de vitrages « auto-nettoyants », qui puissent être à la fois anti-salissures, anti-buée et anti-condensation. Il peut s'agir de vitrages pour le bâtiment du type double-vitrage, de vitrages pour véhicule du type pare-brise, lunette arrière, toit auto, vitres latérales. Il peut aussi s'agir de vitrages pour les trains, les avions, les bateaux. Il peut aussi s'agir de vitrages utilitaires comme des verres d'aquarium, des verres de vitrines, de serre, ou encore des vitrages utilisés dans l'ameublement intérieur, dans le mobilier urbain, de miroirs. Il peut aussi s'agir de vitrages utilisés comme écrans d'affichage du type écran de télévision, d'ordinateur, de téléphone. Ce type de revêtement peut aussi être appliqué à des vitrages électro-commandables, comme des vitrages chauffants à fils ou à couche, des vitrages électrochromes, des vitrages à film à cristaux liquides, des vitrages électroluminescents, des vitrages photovoltaïques.

Dans l'application du substrat de l'invention comme vitrage (à base de matière plastique transparente ou de verre), une ou plusieurs couches minces autres que la sous-couche précitée à base de dérivé au moins partiellement oxydé du silicium, peuvent être interposées entre la surface support et le revêtement à structure mésoporeuse. Il peut s'agir, notamment, de couches à fonction antistatique, thermique (chauffante en la munissant d'amenées de courant, bas-émissive, anti-solaire...), optique (diminuant la réflexion lumineuse et/ou rendant plus neutre la couleur en réflexion du substrat...), d'un empilement de couches anti-reflets... En ce qui concerne de telles couches fonctionnelles appliquées de manière connue sur les vitrages, éventuellement sous forme d'empilements, on citera les demandes WO 97/10186 et WO 02/02472.

Le substrat selon l'invention, outre son application en tant que vitrage, peut être en tout matériau architectural utilisable pour fabriquer cloisons, façades, toitures, sols, en intérieur ou en extérieur (métal, bois, pierre, ciment, béton, terre cuite, céramique, enduit de façade...)

Le substrat, s'il est plutôt à base de laine minérale d'isolation, et textile à base de fibres de verre de renforcement, peut servir comme matériau de filtration, ou encore servir à faire des faux plafonds, dont le nettoyage est malcommode.

L'invention a également pour objet l'application d'un substrat tissé, non tissé (mat aiguilleté, feutre, laine...), tricoté, tressé, bloc de fibres frittées (connu sous le nom de silice rigide) à base de fibres de diamètres compris entre 1 et 20 $\mu$m de silice fondue, verre lavé (plus de 90 % de silice), d'alumine et mullite selon la revendication 1, à la fabrication de filtres anti-odeur, de dépollution d'effluents industriels, anti-bactériens, de dépollution d'intérieur, de purification d'air domestique, de purification d'habitacles de véhicules de transport (automobiles, ferroviaires, aéronautiques, aquatiques), de purification de fumée de cigarette, de purification de système électroménager (réfrigérateur...).

L'invention sera décrite ci-après à l'aide d'exemples non limitatifs.

EXEMPLE 1

On dépose sur le verre sous forme encore d'un ruban de verre float , une sous-couche à base d'oxycarbure de silicium noté par commodité SiOC (sans préjuger du taux réel d'oxygène et de carbone dans le revêtement) - le verre est un verre clair silico-sodo-calcique de 4 mm d'épaisseur, tel que commercialisé par Saint-Gobain Glass France sous la dénomination Planilux-. Cette sous-couche est déposée par CVD à partir de précurseurs Si, en particulier d'un mélange de $SiH_4$ et d'éthylène en dilution dans de l'azote, à l'aide d'une buse disposée au-dessus et transversalement au ruban de verre float d'une ligne de production de verre plat, dans l'enceinte float, quand le verre est encore à une température d'environ 550 à 600°C. Le revêtement obtenu a une épaisseur d'environ 50 nm et un indice de réfraction d'environ 1,55. On découpe des échantillons de 10 cm x 10 cm du verre float muni de sa sous-couche SiOC barrière aux alcalins ainsi obtenu ; ces échantillons sont lavés, rincés, séchés et soumis à un traitement UV ozone pendant 45 min.

On forme sur la sous-couche un revêtement à structure mésoporeuse.

La composition liquide de traitement est obtenue en mélangeant dans une première étape 22,3 ml de tétraéthoxysilane, 22,1 ml d'éthanol absolu, 9 ml de HCl dans de l'eau déminéralisée (pH 1,25) jusqu'à ce que la solution devienne limpide, puis en plaçant le ballon au bain marie à 60°C pendant 1h.

Dans une deuxième étape, on ajoute au sol obtenu précédemment une solution de bromure de cétyltriméthylammonium (CTAB) d'une part, et une solution d'un copolymère blocs polyoxyéthylène-polyoxypropylène commercialisé par la société BASF sous la marque enregistrée Pluronic PE6800 (masse molaire 8000) d'autre part, en proportions telles que les rapports molaires CTAB/Si = 0,1, respectivement PE6800/Si = 0,01. Ceci est obtenu en mélangeant :

- 0,686 g de CTAB, 20 ml d'éthanol, et 10 ml du sol ;
- 3,78 g de PE6800, 50 ml d'éthanol et 25 ml du sol.

Les nanoparticules de $TiO_2$ cristallisées anatase et de taille 50 nm environ sont ajoutées en proportions diverses à l'une ou l'autre des deux compositions liquides ainsi obtenues, juste avant le dépôt sur échantillon. Le dépôt se fait par spin coating en quantité de départ de 3 ml par échantillon. (D'autres techniques de dépôt équivalentes sont le dip coating, la pulvérisation, l'enduction laminaire, le roll coating, le flow coating...)

Les échantillons sont ensuite soumis au traitement de recuit suivant :

- 30 min 100°C palier 2 h ;
- 15 min 150°C palier 2 h ;
- 15 min 175°C palier 2 h ;
- 10 min 200°C pas de palier ;
- 3 h 20 min 300°C palier 1 h ;
- 2 h 30 min 450°C palier 1 h.

Les pores du revêtement ainsi formé ont une taille de 2-3 nm lorsque le tensioactif cationique CTAB est employé comme agent structurant, cette taille étant de 4-5 nm lorsque le copolymère PE6800 est employé comme agent structurant.

On vérifie par analyse SIMS du revêtement à structure mésoporeuse que le rapport atomique Ti/Si est exactement identique à celui de la composition liquide de départ. L'analyse SIMS permet également de vérifier que les nanoparticules sont réparties de façon homogène dans les trois dimensions du revêtement.

On consigne dans le tableau ci-dessous différentes caractéristiques des revêtements à leur formation et après 500 cycles de l'essai d'abrasion Opel - dans ce dernier cas, indication des valeurs entre parenthèses-. L'essai Opel (Norme Bâtiment En 1096-2 de Janvier 2001) consiste à appliquer sur une partie de la surface revêtue de 9,4 cm de longueur -cette partie est appelée piste-, un feutre de 14 mm de diamètre, 10 mm d'épaisseur et 0,52 $g/cm^2$ de densité, sous une charge de 400 $g/cm^2$, le feutre étant soumis à une translation (50 aller-retours sur toute la longueur de piste par minute) combinée à une rotation de 6 tours/min ( 1 cycle = 1 aller-retour).

L'épaisseur E des revêtements en nm est mesurée à partir de profils SIMS et de clichés MEB.

La quantité de $TiO_2$ en $\mu g/cm^2$ est évaluée par fluorescence X.

On mesure l'activité photocatalytique de la façon suivante :

1- test réalisé sur environ 15 $cm^2$ de revêtement ;
2- pesée de l'échantillon et mesure de l'épaisseur du substrat, de la transmission lumineuse $T_L$ et du flou Td (tous deux en %) ;
3- dépôt par spray d'une solution d'acide palmitique (8 grammes d'acide pour 1 l de chloroforme), avec une distance verre/spray de 20 cm, sur substrat vertical, et 3 à 4 passages successifs ;
4- pesée de l'échantillon après dépôt de l'acide palmitique pour évaluer l'épaisseur d'acide palmitique déposée en nanomètres ;

5- mesure de la transmission lumineuse $T_L$ et du flou Td après dépôt ;

6- mesure de la variation du flou en fonction du temps d'irradiation sous UVA d'intensité environ 50W/m$^2$;

7- détermination graphique du temps au bout duquel le flou a diminué de 50% : temps appelé $T_{1/2}$ (disparition) ;

8- évaluation de l'activité photocatalytique du revêtement en vitesse de disparition de l'acide palmitique v (en nm/h) , qui est définie de la façon suivante :

$$v(nm/h) = (épaisseur\ d'acide\ palmitique\ (nm))\ /\ (2\ x\ T_{1/2}\ (disparition\ (h))$$

Est également consignée dans le tableau ci-dessous la valeur de l'activité photocatalytique ramenée à la quantité de TiO$_2$ dans le revêtement. Enfin, on indique les propriétés optiques de réflexion lumineuse Rl et de flou Td (en %).

Les numéros d'essais sont définis comme suit :

- 1 et 2 : CTAB comme agent structurant, Ti/Si = 0,1, respectivement 0,25 ;

- 3 à 7 : PE6800 comme agent structurant, Ti/Si = 0,1, respectivement 0,25, respectivement 0,5, respectivement 1, respectivement 2.

| Essai N° | E nm | TiO$_2$ $\mu$g/cm$^2$ | V nm/h | V/TiO$_2$ | Rl % | Td % |
|---|---|---|---|---|---|---|
| 1 | 214 (220) | 2,2 (1,9) | 43 (21) | 20 (11) | 6,5 (10,2) | 0,8 (0,5) |
| 2 | 208 (247) | 7,5 (5,7) | 117 (114) | 16 (20) | 8,7 (7,9) | 1,1 (1,2) |
| 3 | 274 (209) | 4,7 (3,4) | 47 (31) | 10 (9) | 10,2 (7,8) | 0,2 (0,4) |
| 4 | 308 (299) | 8,0 (10,2) | 209 (123) | 26 (12) | 12,8 (10,2) | 0,2 (0,3) |
| 5 | 336 (294) | 17,3 (14,8) | 349 (181) | 20 (12) | 9,7 (11,4) | 0,4 (0,4) |
| 6 | 454 (184-320) | 33,3 (28,7) | 620 (354) | 18 (12) | 9,7 (14,3) | 0,3 (0,8) |
| 7 | 515 (209-268) | 66,0 (46,7) | 684 (...) | 10 (...) | 9,4 (17,7) | 0,8 (1,1) |

Les épaisseurs des couches varient de 200 à 500 nm selon la quantité de nanoparticules de TiO$_2$ incorporée. Après 500 cycles Opel, uniquement les revêtements les plus épais (450 et 500 nm) subissent un tassement supérieur à la moitié de leur épaisseur initiale. La photoactivité de ces revêtements a néanmoins été testée.

Les revêtements présentent des photoactivités de 43 nm/h pour le revêtement structuré avec le tensioactif cationique et le moins concentré en TiO$_2$ (2,2 $\mu$g/cm$^2$) à 684 nm/h pour le revêtement structuré avec le copolymère et le plus concentré en TiO$_2$ (66 $\mu$g/cm$^2$). Le rapport v/TiO$_2$ est toujours au moins égal à 9.

On observe un maintien partiel ou total de la fonctionnalité après 500 cycles Opel, qui par ailleurs n'altère les propriétés optiques que pour les couches les plus épaisses et les plus concentrées en TiO$_2$ (Ti/Si = 1 et 2) -pour les autres, les valeurs de Rl et Td restent inférieures à 11,4 et 1,2% respectivement-On reproduit les essais 3 à 7 (essais 3' à 7') avec l'irradiation UVA faible de 1,5 W/m$^2$ d'une lampe d'éclairage classique; les valeurs de v (nm/h) et v/TiO$_2$ relevées sont pour les essais N°:

- 3' : 0 et 0 ;
- 4' : 0 et 0;
- 5' : 13 et 0,75 ;
- 6' : 19 et 0,57; et
- 7' : 28 et 0,42.

Le substrat à revêtement de l'invention est donc également photoactif sous une irradiation UVA faible pour la dégradation d'acide palmitique.

EXEMPLE 2

Par ailleurs, on imprègne des disques de 47 mm de diamètre, 8 mm d'épaisseur et 1000 g/m2 de masse surfacique, de feutres aiguilletés de fibres de silice, commercialisés par la société Saint-Gobain Quartz sous la dénomination needled-punched Quartzel mat (fibres entre 7 et 16 $\mu$m) par immersion dans la composition de l'essai N°6 ci-dessus, puis traitement thermique décrit précédemment. L'augmentation de masse des disques ainsi obtenus est de 10%.

On teste la capacité de ces disques à décomposer une concentration de 350 ppm en volume de méthanol dans de l'azote gazeux, par filtration d'un débit de 62,5 ml/mm, sous illumination UV (190-350 nm).

A une puissance d'illumination de 48 m W/cm2, l'efficacité, c'est-à-dire la proportion de méthanol décomposé, est de 100 %. A une puissance de 25,6 m W/cm2, elle est de 96 % environ, et encore de 58 % environ sous illumination aussi faible que 8,22 m W/cm2.

Ainsi l'invention met elle à disposition un substrat apte à procurer la qualité optique de transparence requise dans les applications de vitrages, et une fonctionnalité autonettoyante durable dans les conditions d'érosion et d'intempéries de l'atmosphère extérieure. Le degré remarquablement élevé de fonctionnalité photocatalytique permet d'envisager aussi une utilisation de nuit ou en intérieur par la mise à profit de rayonnements de faibles intensités tels que produits par un éclairage classique ou le passage du rayonnement solaire à travers les vitrages, ainsi que des applications de dépollution d'effluents ou atmosphérique, filtration...

**Revendications**

1. Procédé de fabrication d'un substrat essentiellement transparent, notamment à base de verre ou de polymère(s), ou d'un substrat céramique ou d'un substrat vitro-céramique ou d'un substrat en matériau architectural du type enduit de façade, dalles ou pavé de béton, béton architectonique, tuile, matériau à composition cimentaire, terre cuite, ardoise, pierre, surface métallique, ou d'un substrat fibreux à base verrière du type laine minérale d'isolation ou fils de verre de renforcement, ledit substrat étant muni sur une partie au moins de sa surface d'un revêtement dont la structure mésoporeuse présente des propriétés photocatalytiques et comporte de l'oxyde de titane au moins partiellement cristallisé, ledit procédé comprenant :

   - la préparation d'une composition liquide comprenant au moins un précurseur du matériau constituant la structure mésoporeuse du revêtement et au moins un agent structurant organique,
   - la précipitation du précurseur autour de l'agent structurant organique et la croissance de molécules dérivées du précurseur,
   - l'ajout dans la composition liquide de nanoparticules ou de cristallites élémentaires d'oxyde de titane éventuellement dopé, de diamètres compris entre 0,5 et 100 nm,
   - l'application de la composition sur la surface à revêtir,
   - l'élimination de l'agent structurant organique,

   les cristallites d'oxyde de titane étant incorporées dans la structure mésoporeuse tout en y préservant essentiellement leur intégrité, plusieurs d'entre elles pouvant y être agrégées en nanoparticules.

2. Procédé selon la revendication 1, tel que le substrat est essentiellement transparent, plan ou courbé, du type vitrage.

3. Procédé selon l'une des revendications précédentes, tel que le revêtement est formé avec interposition d'une sous-couche à base de dérivé au moins partiellement oxydé du silicium choisi parmi le dioxyde de silicium, des oxydes de silicium sous-stoechiométriques, l'oxycarbure, l'oxynitrure ou l'oxycarbonitrure de silicium.

4. Procédé selon la revendication précédente, tel que la sous-couche a une épaisseur d'au moins 5 nm, notamment comprise entre 10 et 200 nm, de préférence entre 30 et 120 nm.

5. Procédé selon l'une des revendications précédentes, tel que le revêtement a une épaisseur comprise entre 30 et 800 nm.

6. Procédé selon l'une des revendications précédentes, tel que l'oxyde de titane est éventuellement dopé et comprend des nanoparticules de diamètres compris entre 0,5 et 100 nm, notamment entre 1 et 80 nm, elles-mêmes constituées d'amas de grains ou cristallites élémentaires de diamètres compris entre 0,5 et 10 nm.

**7.** Procédé selon l'une de revendications précédentes, tel que le substrat essentiellement transparent est un vitrage à base de matière plastique transparente ou de verre, et tel qu'un empilement de couches anti-reflets est interposé entre la surface support et le revêtement à structure mésoporeuse.

**8.** Procédé selon l'une des revendications précédentes, tel que la préparation de la composition liquide comprend :

- la préparation d'un sol de précurseur d'oxyde (notamment de silice),
- le mûrissement du sol, puis
- le mélange avec l'agent structurant.

**9.** Procédé selon la revendication précédente, tel que les conditions de mûrissement comprennent le maintien du sol à une température de 40 à 60°C pendant une durée de 30 min à 24 heures.

**10.** Procédé selon la revendication précédente, tel que le précurseur d'oxyde est un composé hydrolysable, tel qu'un halogénure ou un alcoxyde, et l'agent structurant est choisi parmi les tensioactifs cationiques, de préférence du type ammonium quaternaire tel que bromure de cétyltriméthylammonium, ou non ioniques, dont les copolymères di-bloc ou tri-bloc à base par exemple d'oxyde d'éthylène ou de propylène.

**11.** Substrat susceptible d'être obtenu selon le procédé de l'une des revendications précédentes.

**12.** Application du substrat essentiellement transparent selon la revendication 11, à la fabrication de vitrages « auto-nettoyants », notamment anti-buée, anti-salissures et anti-condensation, notamment des vitrages pour le bâtiment du type double-vitrage, des vitrages pour véhicules du type pare-brise, lunette arrière, vitres latérales d'automobiles, des vitrages pour trains, avions, bateaux, des vitrages utilitaires comme des verres d'aquarium, de vitrine, de serre, d'ameublement intérieur, de mobilier urbain, des miroirs, des écrans de systèmes d'affichage du type ordinateur, télévision, téléphone, des vitrages électrocommandables comme des vitrages électrochromes, à cristaux liquides, électroluminescents, des vitrages photovoltaïques.

**13.** Application du substrat en matériau architectural selon la revendication 11 à la fabrication de cloisons, façades, toitures, sols, en intérieur ou en extérieur.

**14.** Application du substrat à base de laine minérale d'isolation et substrat textile à base de fibres de verre de renforcement selon la revendication 11 à la fabrication de faux-plafonds ou de matériaux de filtration.

**15.** Application d'un substrat tissé, non tissé (mat aiguilleté, feutre, laine...), tricoté, tressé, bloc de fibres frittées (connu sous le nom de silice rigide) à base de fibres de diamètres compris entre 1 et 20 $\mu$m de silice fondue, verre lavé (plus de 90 % de silice), d'alumine et mullite selon la revendication 11, à la fabrication de filtres anti-odeur, de dépollution d'effluents industriels, anti-bactériens, de dépollution d'intérieur, de purification d'air domestique, de purification d'habitacles de véhicules de transport (automobiles, ferroviaires, aéronautiques, aquatiques), de purification de fumée de cigarette, de purification de système électroménager (réfrigérateur...).

**Claims**

**1.** A process for manufacturing an essentially transparent substrate, in particular based on glass or one or more polymers, or a ceramic or glass-ceramic substrate, or an architectural material substrate of the type comprising a wall render, a concrete slab or block, architectural concrete, roof tile, material of cementitious composition, terracotta, slate, stone, metal surface or a fibrous substrate, based on glass of the mineral insulation wool type, or glass reinforcement yarns, said substrate being provided on at least part of its surface with a coating whose mesoporous structure exhibits photocatalytic properties and comprises at least partially crystallized titanium oxide, said process comprising:

- the preparation of a liquid composition comprising at least one precursor of the material constituting the mesoporous structure of the coating and at least one organic structuring agent;
- the precipitation of the precursor around the organic structuring agent and the growth of molecules derived from the precursor;

- the addition into the liquid composition of elementary nanoparticles or crystallites of optionally doped titanium oxide with diameters between 0.5 and 100 nm;
- the application of the composition to the surface to be coated; and
- the removal of the organic structuring agent,

the titanium oxide crystallites being incorporated into the mesoporous structure while essentially preserving their integrity therein, it being possible for several of them to be aggregated therein into nanoparticles.

2. The process as claimed in claim 1, wherein the substrate is essentially transparent, flat or curved, of the glazing type.

3. The process as claimed in one of the preceding claims, wherein the coating is formed with the interposition of a sublayer based on an at least partially oxidized silicon derivative chosen from silicon dioxide, substoichiometric silicon oxides, or silicon oxycarbide, oxynitride or oxycarbonitride.

4. The process as claimed in the preceding claim, wherein the sublayer has a thickness of at least 5 nm, especially between 10 and 200 nm, preferably between 30 and 120 nm.

5. The process as claimed in one of the preceding claims, wherein the coating has a thickness of between 30 and 800 nm.

6. The process as claimed in one of the preceding claims, wherein the titanium oxide is optionally doped and comprises nanoparticles with diameters between 0.5 and 100 nm, in particular between 1 and 80 nm, themselves formed from a cluster of elementary grains or crystallites with diameters between 0.5 and 10 nm.

7. The process as claimed in one of the preceding claims, wherein the essentially transparent substrate is a glazing based on glass or transparent plastic, and wherein an antireflection multilayer stack is interposed between the support surface and the coating with a mesoporous structure.

8. The process as claimed in one of the preceding claims, wherein the preparation of the liquid composition advantageously comprises:

- preparation of an oxide (especially silica) precursor sol;
- maturing of the sol; and then
- mixing with the structuring agent.

9. The process as claimed in the preceding claim, wherein the maturing conditions comprise holding the sol at a temperature between 40 and 60°C for a time between 30 minutes and 24 hours.

10. The process as claimed in the preceding claim, wherein the oxide precursor is advantageously a hydrolyzable compound, such as a halide or alkoxide, and the structuring agent is advantageously chosen from cationic surfactants, preferably of the quaternary ammonium type, such as cetyltrimethyl ammonium bromide, or nonionic surfactants, including dibloc or tribloc copolymers based for example on ethylene oxide or propylene oxide.

11. A substrate likely to be obtained according to the process as claimed in one of the preceding claims.

12. The application of the essentially transparent substrate according to claim 11 to the manufacture of "self-cleaning" glazing, especially antifogging, antisoiling and anticondensation glazing, especially glazing for buildings of the double-glazing type, vehicle windows of the windshield, rear window and side window type for automobiles, windows for trains, aircraft and ships, utilitarian glazing, such as aquarium glass, shop window glass and greenhouse glass, interior furnishings, urban furniture, mirrors, screens for display systems of the computer, television and telephone type, electrically controllable glazing, such as electrochromic glazing of the liquid-crystal or electroluminescent type, or photovoltaic glazing.

13. The application of the substrate made of architectural material according to claim 11 to the manufacture of partitions, wall claddings, roofing or flooring, for indoors or outdoors.

14. The application of the substrate based on mineral insulation wool and the textile substrate based on glass reinforcement fibers according to claim 11 to the manufacture of false ceilings or filtration materials.

**15.** The application of a woven substrate, a nonwoven substrate (needle-punched mat, felt, wool, etc.), knitted substrate, braided substrate, or block of sintered fibers (known as "rigid silica") based on fused silica fibers with diameters between 1 and 20 $\mu$m, on washed glass fibers (more than 90% silica) or alumina and mullite fibers according to claim 11, to the manufacture of anti-odor filters, filters for decontamination of industrial effluents, antibacterial filters, filters for indoor decontamination and purification of domestic air, for purification of the passenger compartments of transport vehicles (automobiles, trains, aircraft, ships, etc.), filters for purifying cigarette smoke, filters for purifying domestic electrical appliances (refrigerators, etc.).

**Patentansprüche**

**1.** Verfahren zur Herstellung eines im Wesentlichen transparenten Substrats, das insbesondere auf der Basis von Glas oder einem bzw. mehreren Polymeren ist, eines keramischen Substrats, eines glaskeramischen Substrats, eines Substrats aus einem architektonischen Materials vom Typ Fassadenbeschichtung, Betonplatte oder -pflasterstein, architektonischem Beton, Dachziegel, Material mit Zementzusammensetzung, Terrakotta, Schieferdachplatte, Stein und Metalloberfläche oder eines faserförmigen Substrats auf der Basis von Glas vom Typ Dämmmineralwolle bzw. Verstärkungsglasfasern, wobei das Substrat auf wenigstens einem Teil seiner Oberfläche mit einer Beschichtung versehen ist, deren mesoporöse Struktur photokatalytische Eigenschaften aufweist und wenigstens teilweise kristallisiertes Titanoxid enthält, wobei das Verfahren das:

- Herstellen einer flüssigen Zusammensetzung, die mindestens einen Vorläufer des Materials, das die mesoporöse Struktur der Beschichtung bildet, und mindestens ein organisches strukturbildendes Mittel enthält,
- Abscheiden des Vorläufers um das organische strukturbildende Mittel herum und Wachsen der von dem Vorläufer abgeleiteten Moleküle,
- Zugeben von Nanopartikeln oder Elementarkristalliten aus gegebenenfalls dotiertem Titanoxid mit einem Durchmesser von 0,5 bis 100 nm zu der flüssigen Zusammensetzung,
- Aufbringen der Zusammensetzung auf die zu beschichtende Oberfläche und
- Entfernen des organischen strukturbildenden Mittels

umfasst, wobei die Titanoxidkristallite in die mesoporöse Struktur so eingebaut werden, dass sie ihre Unversehrtheit im Wesentlichen behalten und sich mehrere davon zu Nanopartikeln aggregieren können.

**2.** Verfahren nach Anspruch 1, wobei das Substrat im Wesentlichen transparent, eben oder gebogen und vom Typ Glasscheibe ist.

**3.** Verfahren nach einem der vorhergehenden Ansprüche, wobei die Beschichtung unter Einbau einer Unterschicht auf der Basis einer wenigstens teilweise oxidierten Siliciumverbindung gebildet wird, die aus Siliciumdioxid, unterstöchiometrischen Siliciumoxiden, Siliciumcarbidoxid, -nitridoxid oder -carbonitridoxid ausgewählt ist.

**4.** Verfahren nach dem vorhergehenden Anspruch, wobei die Dicke der Unterschicht mindestens 5 nm, insbesondere zwischen 10 und 200 nm, und vorzugsweise zwischen 30 und 120 nm beträgt.

**5.** Verfahren nach einem der vorhergehenden Ansprüche, wobei die Dicke der Beschichtung 30 bis 800 nm beträgt.

**6.** Verfahren nach einem der vorhergehenden Ansprüche, wobei das Titanoxid gegebenenfalls dotiert ist und Nanopartikel mit einem Durchmesser von 0,5 bis 100 nm und insbesondere zwischen 1 und 80 nm umfasst, die ihrerseits aus Aggregaten aus Elementarkörnchen oder -kristalliten mit einem Durchmesser von 0,5 bis 10 nm gebildet sind.

**7.** Verfahren nach einem der vorhergehenden Ansprüche, wobei das im Wesentlichen transparente Substrat eine Scheibe auf der Basis eines transparenten Kunststoffs oder Glases ist und zwischen die Trägeroberfläche und die Beschichtung mit mesoporöser Struktur ein Antireflex-Schichtaufbau eingebaut wird.

**8.** Verfahren nach einem der vorhergehenden Ansprüche, wobei die Herstellung der flüssigen Zusammensetzung das:

- Erzeugen eines Sols aus dem Vorläufer des Oxids (insbesondere Siliciumdioxids),
- Altern des Sols und anschließende
- Mischen mit dem strukturbildenden Mittel

umfasst.

9. Verfahren nach dem vorhergehenden Anspruch, wobei die Alterungsbedingungen das 30 min bis 24 Stunden lange Halten des Sols auf einer Temperatur von 40 bis 60 °C umfassen.

10. Verfahren nach dem vorhergehenden Anspruch, wobei der Vorläufer des Oxids eine hydrolysierbare Verbindung wie ein Halogenid oder Alkoxid ist und das strukturbildende Mittel aus kationischen Tensiden, vorzugsweise vom Typ quaternäres Ammonium wie Cetyltrimethylammoniumbromid, oder nichtionischen Tensiden, davon Zweiblock- oder Dreiblockcopolymeren auf der Basis von beispielsweise Ethylen- bzw. Propylenoxid, ausgewählt ist.

11. Substrat, das gemäß dem Verfahren nach einem der vorhergehenden Ansprüche hergestellt werden kann.

12. Verwendung des im Wesentlichen transparenten Substrats nach Anspruch 11 zur Herstellung von "selbstreinigenden", insbesondere Nebel, Schmutz und Beschlag abweisenden Glasscheiben, insbesondere Verglasungen für das Bauwesen vom Typ Doppelverglasung, Fahrzeugglasscheiben vom Typ Autofront-, Autoheck- und Autoseitenscheibe, Glasscheiben für Eisenbahnzüge, Flugzeuge und Schiffe, Gebrauchsgläsern wie solchen für Aquarien, Schaufenster, Gewächshäuser, Inneneinrichtungen, Stadtmöblierung und Spiegel, Bildschirmen von Anzeigesystemen vom Typ Computer, Fernseher und Telephon und elektrisch regelbaren Gläsern wie elektrochromen, elektrolumineszenten, Flüssigkristall- und Photovoltaikgläsern.

13. Verwendung des Substrats aus einem architektonischen Material nach Anspruch 11 für die Herstellung von Zwischenwänden, Fassaden, Dächern und Böden innen oder außen.

14. Verwendung eines Substrats auf der Basis von Dämmmineralwolle und eines textilen Substrats auf der Basis von Verstärkungsglasfasern nach Anspruch 11 für die Herstellung von Zwischendecken oder Filtermaterialien.

15. Verwendung eines Substrats, das gewebt, gestrickt oder geflochten, ein Nonwoven (beispielsweise eine Steppmatte, ein Filz und Wolle) und ein Sinterfaserblock (unter der Bezeichnung feste Silicafasern bekannt) ist, auf der Basis von Fasern mit einem Durchmesser von 1 bis 20 $\mu$m aus geschmolzenem Siliciumdioxid und gewaschenem Glas (mehr als 90 % Siliciumdioxid), Aluminiumoxid und Mullit nach Anspruch 11 zur Herstellung von Filtern gegen Gerüche, zur Reinigung industrieller Abflüsse, gegen Bakterien und zur Reinigung von Innenräumen, Haushaltluft, Fahrgasträumen von Transportfahrzeugen (Kraftfahrzeugen, Eisenbahnzügen, Luft- und Wasserfahrzeugen), Zigarettenrauch und Haushaltgeräten (beispielsweise Kühlschränken).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9710185 A
- WO 9710186 A
- WO 9944954 A
- WO 0166271 A
- JP 2001246261 A
- WO 03010106 A
- WO 0132578 A
- WO 0202472 A